# EUROPÄISCHE PATENTSCHRIFT

(11) **EP 0 426 220 B1**
(45) Veröffentlichungstag und Bekanntmachung des Hinweises auf die Patenterteilung: **08.06.1994**
(21) Anmeldenummer: 90202715.0
(22) Anmeldetag: 12.10.1990
(51) Int. Cl.: F16D 41/07, F16D 41/06

(54) **Freilauf**
Free-wheel
Roue libre

(30) Priorität: 03.11.1989 DE 3936586
(43) Veröffentlichungstag der Anmeldung: 08.05.1991
(73) Patentinhaber: Fried. Krupp AG Hoesch-Krupp, 44145 Dortmund (DE)
(72) Erfinder: Bertram, Johannes, Dipl.-Ing., W-4751 Unna-Billmerich (DE); Krug, Ulrich, Dipl.-Ing., W-5800 Hagen 1 (DE); Grünewald, Peter, Dipl.-Ing., W-3501 Fuldabrück 1 (DE)

(56) Entgegenhaltungen:
- BE-A- 518 587
- DE-A- 2 743 310
- DE-B- 1 113 337
- DE-B- 1 295 291
- DE-C- 426 602
- DE-C- 538 044
- FR-A- 1 357 764
- FR-A- 2 168 808
- GB-A- 465 081
- US-A- 1 634 202

## Beschreibung

Die Erfindung betrifft einen Freilauf nach dem Oberbegriff des Anspruchs 1. Für manche Einsatzfälle wird ein freier Mittendurchmesser benötigt. In diesen Fällen wird die Welle als Hohlwelle ausgebildet. Für den Einsatz von Freiläufen, beispielsweise in Baggern, Kranen oder Drehtischen, ist ein freier Mittendurchmesser von mehr als 500 mm erforderlich.

Bei einem zweifach wirkenden Klemmkörper-Überholfreilauf, entsprechend der DE-AS 1 259 151 kommt, abhängig von den Drehzahlen der Kraftmaschine und der Arbeitsmaschine die eine oder die andere Klemmkörperreihe zum Einsatz. Dieser Freilauf ist nachteilig nicht für den Einsatz zum Übertragen von besonders hohen Haltekräften einzusetzen. Die bei der Klemmung entstehenden Normalkräfte der Klemmkörper auf die Laufbahnen sind so groß, daß die Aufbiegung der Ringteile so groß wird, daß die Klemmfunktion des Freilaufes nicht mehr gewährleistet ist. Darüber hinaus führt eine durch die Schrägstellung der Laufbahnen hervorgerufene Punktbelastung zur Zerstörung von Klemmkörpern und Laufbahnen.

Die DE-AS 1 113 337 zeigt einen einfach wirkenden Freilauf nach dem Oberbegriff des Anspruchs 1, bei dem die vorbeschriebenen Nachteile geringer sind. Bei Freiläufen mit einem freien Durchmesser von mehr als 500 mm und beim Einsatz bei besonders hohen Haltekräften ist jedoch die auftretende Verformung noch zu hoch.

Von daher stellt sich die Aufgabe, einen einfach wirkenden Freilauf zu finden, der es erlaubt, einen freien Mittendurchmesser von mehr als 500 mm zu ermöglichen, sehr große Drehmomente zu halten und mit geringem Materialaufwand herstellbar zu sein.

Diese Aufgabe wird erfindungsgemäß durch die Merkmale des kennzeichnenden Teiles des Anspruchs 1 bzw. des Anspruchs 2 gelöst. Vorteilhafte Ausgestaltungen werden in den Ansprüchen 3 bis 6 beschrieben.

Die mit der Erfindung erzielten Vorteile bestehen insbesondere darin, daß ein Freilauf mit einem freien Mittendurchmesser von mehr als 500 mm in der Lage ist, hohe Haltekräfte aufzubringen und dabei nur ein geringes Bauvolumen zu benötigen.

Durch die Anordnung mehrerer gleichzeitig wirkender Klemmkörperreihen auf einer Ebene oder auf einem Durchmesser und zwischen ihnen Umlaufende mit einem der Ringe verbundenen Stege wird vorteilhaft erreicht, daß das übertragbare Kupplungsdrehmoment sich aus den Einzeldrehmomenten der jeweils einzelnen Klemmkörperreihen addiert. Das heißt, daß jede Klemmkörperreihe gegenüber einer Ausbildung mit nur einer wirkenden Klemmkörperreihe auch nur den Bruchteil entsprechend der Anzahl der wirkenden Klemmkörperreihen an der erforderlichen Reibkraft aufzubringen hat. Somit reduzieren sich in gleicher Weise die Normalkräfte der Einzelklemmkörper entsprechend der Anzahl der eingesetzten Klemmkörperreihen.

Durch die Anordnung der Klemmkörperreihen in der Form, daß die Klemmnormalkräfte auf einer Ebene oder einem Durchmesser wirken und daß zwischen die Klemmkörperreihen umlaufende, mit den Ringen verbundene Stege ragen, wird erreicht, daß die Klemmnormalkräfte der Klemmkörperreihen, die beidseitig entgegengesetzt auf die Stege einwirken, auf diese nahezu keine Biegekräfte aufbringen. Weiterhin vorteilhaft wird der die äußeren Klemmkörperreihen umfassende Ring lediglich durch den entsprechend der Anzahl der Klemmkörperreihen dividierten Teil der Gesamtnormalkräfte aufgeweitet.

Die Ausbildung des Freilaufs mit einem eigenen Gehäuse bringt den Vorteil, daß die Anschlußkonstruktion, zum Beispiel hinsichtlich Materialwahl und Wärmebehandlung, nicht nach den Erfordernissen des Freilaufs ausgebildet sein muß.

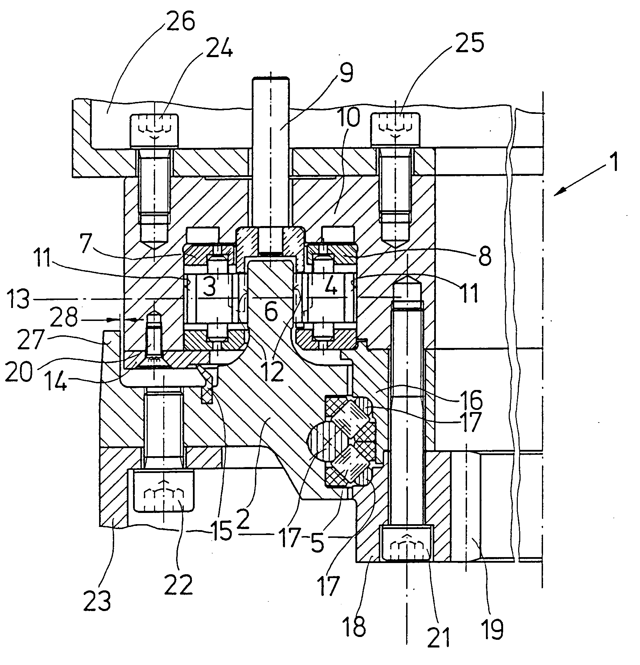

Ein Ausführungsbeispiel der Erfindung ist in der Zeichnung dargestellt und wird im folgenden näher beschrieben. Die Abbildung zeigt einen Querschnitt durch die Hälfte des Freilaufs.

Der Freilauf besteht aus einem Innenring 1 und einem Außenring 2. Zwischen diesen Ringen sind zwei Klemmkörperreihen 3, 4 und ein . Wälzlager 5 angeordnet. Der Außenring 2 ist mit einem umlaufenden Steg 6 ausgebildet, der zwischen die beiden Klemmkörperreihen 3, 4 ragt. Die Klemmkörper sind in Käfigen 7, 8 geführt. Eine Betätigungsvorrichtung 9 bewirkt das gleichzeitige Klemmen und Lösen der Klemmkörper. Der Außenring 2 ist im Ausführungsbeispiel einteilig ausgebildet. Der Innenring 1 ist aus vier Ringen 14, 10, 16, 18 zusammengeschraubt, wobei der Mantelring 10 die Klemmkörperreihen 3, 4 U-förmig umschließt und vorzugsweise gehärtete Klemmbahnen 11 aufweist.

Die Gegenklemmbahnen 12 am Steg 6 des Außenringes 2 sind ebenfalls gehärtet ausgebildet. Im gezeigten Ausführungsbeispiel sind zwei Klemmkörperreihen 3, 4 vorgesehen. Die Klemmnormalkräfte beider Reihen wirken auf einer Ebene 13. Dadurch heben sich die inneren Kräfte am Steg nahezu auf. Die inneren, eine Spreizung des Mantelringes 10 hervorrufenden Normalkräfte entsprechen der Hälfte der Gesamtnormalkräfte. Als Teilring des Innenringes 1 dient ein Haltering 14 dazu, den Käfig 7 der äußeren Klemmkörperreihe 3 zu führen. Er trägt darüber hinaus eine Dichtfläche, gegen die die Lippe einer im Außenring 2 angeordneten Dichtung 15 wirkt. Als weiterer Teilring des Innenringes 1 ist der Lagerring 16 mit dem Mantelring 10 verschraubt. Der Lagerring 16 trägt einen eine Laufbahn aufweisenden Laufdraht 17 des als doppelreihiges Schrägrollendrahtlager ausgebildeten Wälzlagers 5. Die weiteren Laufbahnen, die an Laufdrähten 17 angeordnet sind, trägt der Außenring 2 und der ebenfalls als Teil des Innenringes 1 ausgebildete Zahnring 18. Der Zahnring 18 ist mit einer Innenverzahnung 19 ausgebildet. Die Einzelringe 10, 14, 16, 18 des Innenringes 1 werden durch Schrauben 20, 21 miteinander verbunden. Ebenfalls über Schrauben 22 ist die untere Anschlußkonstruktion 23 mit dem Außenring 2 verbunden. Die Schrauben 24, 25 verbinden die obere Anschlußkonstruktion 26 mit dem Innenring 1. Beim Halten großer Drehmomente treten, hervorgerufen durch die entsprechenden Klemmkräfte der Klemmkörper 3, 4, hohe Spreizkräfte auf, die zu einem Aufweiten des Innenringes 1 führen. Um durch diese großen Spreizungen die Funktion des Freilaufes nicht zu gefährden bzw. um geringe Abmessungen für Innenring 1 und Außenring 2 zu erhalten, ist in einer bevorzugten Ausbildung vorgesehen, daß der Außenring 2 mit einer Schulter 27 ausgebildet ist und den Außendurchmesser des Innenringes 1 übergreift. Sobald die Aufweitkräfte so stark angewachsen sind, daß der Abstand 28 geschlossen ist, verhindert die Schulter 27 ein weiteres Aufspreizen des Innenringes 1. Der Abstand 28 wird so gering wie möglich gehalten. Selbstverständlich darf die Drehbewegung des Freilaufs nicht durch ein Schleifen der Ringe 1, 2 gegeneinander behindert werden.

### Bezugszeichenverzeichnis

- 1.: Innenring
- 2.: Außenring
- 3.: Klemmkörperreihe
- 4.: Klemmkörperreihe
- 5.: Wälzlager
- 6.: Steg
- 7.: Käfig
- 8.: Käfig
- 9.: Betätigungsvorrichtung
- 10.: Mantelring
- 11.: Klemmbahn
- 12.: Klemmbahn
- 13.: Ebene
- 14.: Haltering
- 15.: Dichtung
- 16.: Lagerring
- 17.: Laufdraht
- 18.: Zahnring
- 19.: Innenverzahnung
- 20.: Schraube
- 21.: Schraube
- 22.: Schraube
- 23.: untere Anschlußkonstruktion
- 24.: Schraube
- 25.: Schraube
- 26.: obere Anschlußkonstruktion
- 27.: Schulter
- 28.: Abstand

## Patentansprüche

1. Einfach wirkender Freilauf mit einem freien Durchmesser von mehr als 500 mm mit den Freilauf umschließendem Innenring (1) und Außenring (2), zwischen denen ein Wälzlager (5) oder Gleitlager sowie mehrere gleichzeitig in gleicher Richtung sperrende Klemmkörperreihen (3, 4), deren Klemm-Normalkräfte etwa auf einer Ebene (13) oder einem Durchmesser wirken, angeordnet sind und mit wenigstens einem, mit einem der Ringe (1, 2) verbundenen, zwischen die Klemmkörperreihen (3, 4) ragenden, umlaufenden Steg (6), **dadurch gekennzeichnet**, daß eine durch einen der Ringe (1, 2) nach außen geführte, auf die Klemmkörperreihen (3, 4) wirkende Betätigungsvorrichtung (9) die Klemmkörper der Klemmkörperreihen (3, 4) annähernd gleichzeitig in Klemm- oder Lösestellung bringt und der Außenring (2) und/oder der Innenring (1) durch eine im Bereich der Klemmkörperreihen (3, 4) angeordnete ringförmige Schulter (27) des Außenringes (2), des Innenringes (1) oder der Anschlußkonstruktion (23, 26) übergriffen wird.

2. Einfach wirkender Freilauf mit einem freien Durchmesser von mehr als 500 mm mit den Freilauf umschließendem Innenring (1) und Außenring (2), zwischen denen ein Wälzlager (5) oder Gleitlager sowie mehrere gleichzeitig in gleicher Richtung sperrende Klemmkörperreihen (3, 4), deren Klemm-Normalkräfte etwa auf einer Ebene (13) oder einem Durchmesser wirken, angeordnet sind und mit wenigstens einem, mit einem der Ringe (1, 2) verbundenen, zwischen die Klemmkörperreihen (3, 4) ragenden, umlaufenden Steg (6), **dadurch gekennzeichnet**, daß eine durch einen der Ringe (1, 2) nach außen geführte, auf die Klemmkörperreihen (3, 4) wirkende Betätigungsvorrichtung (9) die Klemmkörper der Klemmkörperreihen (3, 4) annähernd gleichzeitig in Klemm- oder Lösestellung bringt und bei drei oder mehr Klemmkörperreihen (3, 4) die umlaufenden Stege (6) abwechselnd mit dem Außenring (2) und dem Innenring (1) verbunden sind.

3. Freilauf nach einem der Ansprüche 1 oder 2**, dadurch gekennzeichnet**, daß der Außenring (2) und/oder Innenring (1) segmentförmig, scheibenförmig und/oder ringförmig geteilt aus mehreren Ringen(10, 14) oder Ringsegmenten zusammengesetzt ist.

4. Freilauf nach einem oder mehreren der Ansprüche 1 bis 3, **dadurch gekennzeichnet**, daß die Ringe (1, 2) mit Befestigungsmitteln (22, 24, 25) oder Befestigungsbohrungen zum Verbinden mit der Anschlußkonstruktion (23, 26) ausgebildet sind.

5. Freilauf nach einem oder mehreren der Ansprüche 1 bis 4, **dadurch gekennzeichnet**, daß ein Ring (18) mit einer Verzahnung (19) ausgebildet ist.

6. Freilauf nach einem oder mehreren der Ansprüche 1, 3, 4, 5, **dadurch gekennzeichnet**, daß die Schulter (27) einen geringen Abstand (28) zum Außendurchmesser des Außenringes (2) oder Innendurchmesser des Innenringes (1) aufweist.

## Claims

1. A single-acting freewheel having a free diameter of more than 500 mm with an inner ring (1) encompassing the freewheel and an outer ring (2), wherein disposed between the inner ring (1) and the outer ring (2) are a roller bearing (5) or a sliding bearing as well as a plurality of rows of clamping elements (3, 4) which have a locking effect simultaneously in the same direction and whose normal clamping forces act approximately on one plane (13) or one diameter and furthermore having at least one circumferential flange (6) connected to one of the rings (1, 2) and protruding between the rows of clamping elements (3, 4), characterised in that an actuating device (9), which is guided outwards through one of the rings (1, 2) and acts upon the rows of clamping elements (3, 4), brings the clamping elements of the rows of clamping elements (3,4) approximately simultaneously into a clamping or release position and that an annular shoulder (27), disposed in the region of the rows of clamping elements (3, 4), of the outer ring (2), of the inner ring (1) or of the connection structure (23, 26) engages over the outer ring (2) and/or the inner ring (1).

2. A single-acting freewheel having a free diameter of more than 500 mm with an inner ring (1) encompassing the freewheel and an outer ring (2), wherein disposed between the inner ring (1) and the outer ring (2) are a roller bearing (5) or a sliding bearing as well as a plurality of rows of clamping elements (3,4) which have a locking effect simultaneously in the same direction and whose normal clamping forces act approximately on one plane (13) or one diameter and further having at least one circumferential flange (6) connected to one of the rings (1, 2) and protruding between the rows of clamping elements (3, 4) characterised in that an actuating device (9), which is guided outwards through one of the rings (1, 2) and acts upon the rows of clamping elements (3, 4), brings the clamping elements of the rows of clamping elements (3, 4) approximately simultaneously into a clamping or release position and in the case of three or more rows of clamping elements (3, 4) the circumferential flanges (6) are connected alternately to the outer ring (2) and the inner ring (1).

3. A freewheel as claimed in one of claims 1 or 2, characterised in that the outer ring (2) and/or the inner ring (1), divided segmentally, in a disc-shaped manner and/or annularly, is composed of a plurality of rings (10, 14) or ring segments.

4. A freewheel as claimed in one or several of claims 1 to 3, characterised in that the rings (1, 2) are formed with fastening means (22, 24, 25) or fastening bores for connection to the connection structure (23, 26).

5. A freewheel as claimed in one or several of claims 1 to 4, characterised in that a ring (18) is formed with teeth (19).

6. A freewheel according to one or several of claims 1, 3, 4, 5 characterised in that the shoulder (27) is spaced at a short distance (28) from the external diameter of the outer ring (2) or internal diameter of the inner ring (1).

## Revendications

1. Roue libre au fonctionnement simple, d'un diamètre libre de plus de 500 mm, entourée d'un anneau interne (1) et d'un anneau externe (2), entre lesquels sont disposés un palier à roulement (5) ou un palier à glissement, ainsi que plusieurs séries de corps de blocage (3, 4) bloquant en même temps dans la même direction, dont les forces normales de blocage agissent approximativement suivant un plan (13) ou un diamètre, et avec au moins une saillie (6) périphérique reliée a un des anneaux (1, 2) et ressortant entre les séries de corps de blocage (3, 4), caractérisée en ce qu'un dispositif d'actionnement (9) agissant sur les séries de corps de blocage (3, 4), guidé vers l'extérieur par un des anneaux (1, 2), amène à peu près simultanément en position de blocage ou en position de libération les corps de blocage des séries de corps de blocage (3, 4), et l'anneau externe (2) et/ou l'anneau interne (1) est chevauché par un épaulement (27) annulaire de l'anneau externe (2), de l'anneau interne (1) ou de l'ensemble (23, 26) à raccorder, épaulement prévu dans la zone des séries de corps de blocage (3, 4).

2. Roue libre au fonctionnement simple, d'un diamètre libre de plus de 500 mm, entourée d'un anneau interne (1) et d'un anneau externe (2), entre lesquels sont disposés un palier à roulement (5) ou un palier à glissement, ainsi que plusieurs séries de corps de blocage (3, 4) bloquant en même temps dans la même direction, dont les forces normales de blocage agissent approximativement suivant un plan (13) ou un diamètre, et avec au moins une saillie périphérique (6) reliée à un des anneaux (1, 2) et ressortant entre les séries de corps de blocage (3, 4), caractérisée en ce qu'un dispositif d'actionnement (9) agissant sur les séries de corps de blocage (3, 4), guidé vers l'extérieur par un des anneaux (1, 2), amène à peu près simultanément en position de blocage ou en position de libération les corps de blocage des séries de corps de blocage (3, 4), et pour trois rangées ou plus de corps de blocage (3, 4), la saillie prériphérique (6) est reliée alternativement à l'anneau externe (2) et à l'anneau interne (1).

3. Roue libre selon l'une des revendications 1 ou 2, caractérisée en ce que l'anneau externe (2) et/ou l'anneau interne (1), divisé en segments, disques et/ou anneaux, est constitué de l'assemblage de plusieurs anneaux (10, 14) ou de segments d'anneaux.

4. Roue libre selon une ou plusieurs des revendications 1 à 3, caractérisée en ce que les anneaux (1, 2) sont réalisés avec des moyens de fixation (22, 24, 25) ou des alésages de fixation en vue de la liaison à l'ensemble (23, 26) à raccorder.

5. Roue libre selon une ou plusieurs des revendications 1 à 4, caractérisée en ce qu'un anneau (18) est réalisé avec une denture (19).

6. Roue libre selon une ou plusieurs des revendications 1, 3, 4, 5, caractérisée en ce que l'épaulement (27) présente un petit écart (28) par rapport au diamètre externe de l'anneau externe (2) ou au diamètre interne de l'anneau interne (1).
